# EUROPÄISCHE PATENTSCHRIFT

(11) **EP 3 322 924 B1**
(45) Veröffentlichungstag und Bekanntmachung des Hinweises auf die Patenterteilung: **26.12.2018**
(21) Anmeldenummer: 16757548.9
(22) Anmeldetag: 13.07.2016
(51) Int. Cl.: F16J 15/06, F16J 15/12, F16J 13/02

(54) **MARKIERTE FASSDICHTUNG SOWIE VERFAHREN ZUR BESTIMMUNG DES ALTERS EINER FASSDICHTUNG**
MARKED KEG/CASK SEAL, AND METHOD FOR DETERMINING THE AGE OF A KEG/CASK SEAL
JOINT DE FÛT MARQUÉ ET PROCÉDÉ PERMETTANT DE DÉTERMINER L'ÂGE D'UN JOINT DE FÛT

(30) Priorität: 14.07.2015 DE 102015111376
(43) Veröffentlichungstag der Anmeldung: 23.05.2018
(73) Patentinhaber: DSI Getränkearmaturen GmbH, 59069 Hamm (DE)
(72) Erfinder: STEINMETZ, Harald, 59078 Aachen (DE)
(74) Vertreter: Osterhoff, Utz
(86) Internationale Anmeldenummer: PCT/DE2016/100313
(87) Internationale Veröffentlichungsnummer: WO 2017/008787

(56) Entgegenhaltungen:
- EP-A1- 2 096 580
- EP-A1- 2 128 802
- WO-A1-2014/128091
- DE-A1-102009 016 429
- US-A- 2 961 111

## Beschreibung

Die vorliegende Erfindung betrifft eine Fassdichtung für ein Getränkefass gemäß den Merkmalen im Oberbegriff von Patentanspruch 1.

Die vorliegende Erfindung betrifft weiterhin ein Erkennungssystem für Fassdichtungen gemäß den Merkmalen im Oberbegriff von Patentanspruch 8.

Die Erfindung betrifft weiterhin ein Verfahren zur Bestimmung des Alters einer Fassdichtung gemäß den Merkmalen im Patentanspruch 9.

Aus dem Stand der Technik (WO-A-2014/128091) ist es bekannt, zum Transport, zur Lagerung, jedoch auch zum Bereitstellen von Getränken diese in Behältnissen bereitzustellen. Hierzu werden zum einen Flaschen verwendet, bei größeren Mengen kommen jedoch Getränkefässer zum Einsatz. Diese können dann ein Volumen von 10 Liter und mehr, insbesondere zwischen 10 bis 150 Litern, aufnehmen.

Für verschiedene Getränkesorten und Gebindegrößen sind diese Getränkefässer normiert. Dies betrifft den Werkstoff, aus welchem das Fass hergestellt ist, die äußeren Abmessungen sowie insbesondere den Fassanschluss. Über den Fassanschluss wird zum einen in der Brauerei bzw. dem Abfüllbetrieb das Getränk in das Fass abgefüllt. Die Fassdichtung hält dann das Getränk, insbesondere mit einem Überdruck, zum Transport und zur Lagerung in dem Fass. Am Einsatzort, beispielsweise in einem Gastronomiebetrieb, wird das Fass an eine Entnahmestelle, insbesondere eine Zapfanlage, angeschlossen. Hierzu gibt es verschiedene Arten von Verschlüssen, die auf das Fass aufgesteckt und/oder angeklemmt werden. Auch hier dichtet die Fassdichtung den gekoppelten Verschluss mit ab, so dass das gezapfte bzw. entnommene Getränk über eine Leitung einer Zapfstelle bzw. einem Zapfhahn zugeführt wird.

Während dieser Vorgänge (Abfüllen, Lagern, Zapfen) sind die Fassdichtungen einem einsatzbedingten Verschleiß, insbesondere abrasiven Verschleiß, ausgesetzt. Zugleich jedoch unterliegen die Fassdichtungen einem Alterungsprozess, so dass je nach verwendetem Dichtwerkstoff dieser mitunter porös oder brüchig werden kann.

Aufgabe der vorliegenden Erfindung ist es daher, eine Fassdichtung bereitzustellen, die in einfacher und effektiver Weise in Bezug auf ihr Alter und/oder die Einsatzdauer sowohl manuell als auch vollautomatisiert identifizierbar ist. Weiterhin ist es Aufgabe der Erfindung, ein Verfahren zur Durchführung dieser Identifizierung aufzuzeigen.

Die zuvor genannte Aufgabe wird erfindungsgemäß mit einer Fassdichtung für ein Getränkefass gemäß den Merkmalen im Patentanspruch 1 gelöst.

Die Erfindung wird weiterhin mit einem Erkennungssystem für Fassdichtungen von Getränkefässern gemäß den Merkmalen im Patentanspruch 8 gelöst.

Der verfahrenstechnische Teil der Aufgabe wird mit einem Verfahren zur Bestimmung des Alters einer Fassdichtung mit den Merkmalen im Patentanspruch 9 gelöst.

Vorteilhafte Ausgestaltungsvarianten sind in den abhängigen Patentansprüchen beschrieben.

Die Fassdichtung für ein Getränkefass weist einen runden Grundkörper aus Dichtwerkstoff auf. Insbesondere handelt es sich bei dem Dichtwerkstoff um einen Kunststoffwerkstoff oder einen gummiartigen Werkstoff. Im mittleren Bereich ist dieser von einer Ausnehmung, insbesondere einer runden Ausnehmung, durchgriffen. Der Grundkörper ist aus einem oberen tellerförmigen Bereich und einem sich davon in Einbaulage nach unten erstreckenden Stegbereich ausgebildet. Erfindungsgemäß zeichnet sich die Fassdichtung dadurch aus, dass auf einer Oberseite des tellerförmigen Bereiches eine farbliche Kennzeichnung mit einer definierten geometrischen Form aufgebracht ist.

Im Rahmen der Erfindung ist es somit auf redundante Art und Weise möglich, aufgrund der geometrischen Form der farblichen Kennzeichnung, jedoch auch aufgrund der verwendeten Farbe, die Fassdichtung in Bezug auf Alter, insbesondere Einbaualter, zu klassifizieren bzw. identifizieren. Dies bietet insbesondere die Möglichkeit, dass bei Beschädigung des Lackes der geometrischen Form oder aber ausgeblichener farblicher Kennzeichnung eine hinreichende, insbesondere redundante, Erfassung der Zeitperiode, insbesondere Zuordnung zu dem Montagejahr, über mindestens eines der Merkmale (Farbe, geometrische Form) möglich ist. Diese Klassifizierung ist insbesondere einer Zeitperiode zugeordnet. So kann beispielsweise in einem Zeitintervall von einem jeweiligen Kalenderjahr die Farbe und/oder die geometrische Form gewechselt werden.

In einfachster Ausgestaltung ist insbesondere ein Kreisring auf der Oberseite des Grundkörpers aufgebracht. Diese Oberseite ist an dem gelagerten Fass grundsätzlich sichtbar. Sowohl ein Monteur bzw. Lagerist kann durch das menschliche Auge die Farbe und/oder geometrische Form erfassen. Auch ist es möglich, teilmechanisiert, beispielsweise mit einem Handscangerät, Farbe und/oder Form zu erfassen. Darüber hinaus ist es ebenfalls möglich, vollautomatisiert Farbe und/oder Form des Fasses, beispielsweise in einem Abfüllbetrieb, durch einen optischen Sensor, insbesondere einen kamerabasierten Sensor, zu erfassen.

In bevorzugter Ausgestaltungsvariante ist die geometrische Form ein umlaufender Kreisring mit einer Farbe. Diese Farbe ist beispielsweise blau, sie kann dann einem Kalenderjahr X zugeordnet werden. Wechselt nunmehr das Kalenderjahr in das Jahr X + 1 kann eine abweichende Farbe verwendet werden, beispielsweise rot. Im darauf wiederum folgenden Kalenderjahr X + 2 kann dann eine erneute Farbe verwendet werden, beispielsweise grau.

Bei der Farbauswahl kann es sich insbesondere um Farben nach dem Farbcodesystem RAL handeln. Besonders bevorzugt werden die Farben blau RAL 5002, rot RAL 3020, grau RAL 7046, grün RAL 6032, gelb RAL 1016, violett RAL 4008, orange RAL 2011, magenta RAL 4010, weiß RAL 1013 und lichtgrün RAL 6027. Bei diesen Farben hat sich durch verschieden verwendete Außenfarbgebungen und/oder Beschichtungen von Fässern sowie je nach verwendetem Dichtwerkstoff des Grundkörpers eine besonders vorteilhafte Farbwiedergabe und/oder Farberkennung herausgestellt. Auch können andere Farbcodierungssysteme, beispielsweise Pantone, verwendet werden.

Bei der geometrischen Form kann im Rahmen der Erfindung auch ein QR-Code, ein Strichcode bzw. Barcode oder ein systeminterner Code verwendet werden.

Besonders bevorzugt wird die geometrische Form jedoch derart ausgebildet, dass sie ein zumindest teilweise umlaufender Ring ist. Dieser Ring ist bevorzugt in einzelne Ringsegmente eingeteilt. Beispielsweise kann ein Ringsegment als Dreiviertelkreis ausgebildet sein. Mithin wird aus dem umlaufenden Kreisring ein Ringsegment von 90° ausgeschnitten bzw. nicht farblich gekennzeichnet. Bei Verblassen der Farbe ist es darüber hinaus somit redundant möglich, nicht nur aufgrund der Farbe selbst, sondern auch aufgrund der geometrischen Form die der Kennzeichnung zugeordnete Zeitperiode zu identifizieren. Somit ist der vollständig umlaufende Ring wiederum dem Jahr X zugeordnet und beispielsweise die geometrische Form eines 90° ausgeschnittenen Ringsegmentes des umlaufenden Ringes ist dann dem Kalenderjahr X + 1 zugeordnet.

Es hat sich im Rahmen der Erfindung als besonders vorteilig erwiesen, wenn ein, zwei, drei oder vier Ringsegmente den teilweise umlaufenden Ring als geometrische Form ausbilden.

Weitere bevorzugte Ausgestaltungsvarianten bezüglich des teilweise umlaufenden Ringes sind nachfolgend aufgeführt. Es hat sich als vorteilig erwiesen, weiterhin zwei Ringsegmente zu verwenden, wobei von dem umlaufenden Ring jeweils auf zwei gegenüberliegenden Seiten ein 30° Ringsegment ausgeschnitten ist. Alternativ dazu können auch zwei voneinander ungleiche Ringsegmente verwendet werden, in dem auf zwei Seiten ein Ringsegment von jeweils 75° ausgeschnitten ist, die sich jedoch nicht komplementär gegenüberliegen. Es ergibt sich somit ein kleineres Ringsegment mit farblicher Kennzeichnung sowie ein demgegenüber größeres Ringsegment ebenfalls mit farblicher Kennzeichnung.

Eine weitere bevorzugte Ausgestaltungsvariante sieht drei Ringsegmente vor. Radial umlaufend verteilt an drei gegenüberliegenden Stellen sind hierzu bevorzugt jeweils Ringsegmente von 60° ausgeschnitten.

Ebenfalls hat es sich als vorteilig erwiesen, vier Ringsegmente zu verwenden. Hierzu sind an vier radial umlaufend verteilt gegenüberliegenden Stellen bevorzugt wiederum vier Ringsegmente zu 45° ausgeschnitten oder aber vier Ringsegmente zu 30°. Die jeweils verbleibenden Ringsegmente sind entsprechend farblich gekennzeichnet. Beispielsweise können bei Einsatz von 10 RAL Farbtönen und 7 Mustern 70 Kombinationen realisiert werden.

Um diese farbliche Kennzeichnung auszuführen, wird insbesondere die Kennzeichnung mittels eines Farbauftragverfahrens aufgebracht. Hierzu wird somit zunächst die Fassdichtung mit ihrem Grundkörper hergestellt. Je nach Typ der Fassdichtung können zusätzliche Armierungen, beispielsweise Fasern oder aber auch eine Metallverstärkung eingebracht sein. Insbesondere sind die Fassdichtungen aus einem Dichtwerkstoff auf Kunststoffbasis hergestellt. Besonders bevorzugt kommen gummiartige Dichtwerkstoffe zum Einsatz. Diese werden insbesondere gegossen, gespritzt oder in sonstiger Verarbeitungsweise hergestellt. Im Anschluss daran wird die farbliche Kennzeichnung in der vorgegebenen geometrischen Form aufgebracht. Dies kann insbesondere durch Tampondruck, Siebdruck/Sprühlack oder auch mittels eines Folientransferverfahrens hergestellt werden. Bevorzugt wird die farbliche Kennzeichnung, bevorzugt der Lack, mehrlagig aufgebracht. Dies erfolgt insbesondere mindestens zweilagig, bevorzugt dreilagig oder mehrlagig. Durch das mehrlagige Aufbringen wird die Deckkraft der farblichen Kennzeichnung, insbesondere gegenüber einem schwarzen Untergrund, gesteigert. Es wird weiterhin eine bessere Resistenz gegenüber mechanischem Abrieb und chemischen Einflüssen wie Säuren und Laugen hergestellt.

Die Farbe für die farbliche Kennzeichnung ist insbesondere ein zwei Komponenten Lack. Diese, jedoch auch andere verwendete Farben sind insbesondere lebensmittelkonform und/oder abriebfest und/oder säurebeständig und/oder temperaturbeständig und/oder dauerelastisch aushärtend.

Die Lebensmittelkonformität bietet dabei den Vorteil, dass sie in der Getränkeindustrie unabhängig von dem verwendeten Getränk einsetzbar ist.

Die Abriebfestigkeit bietet eine gute Resistenz gegen abrasive, mechanische Vorgänge, die beim Abfüllen und/oder Ansetzen eines Zapfkopfes sowie auch unsachgemäßer Handhabung beim Transport auftreten können.

Die Säurebeständigkeit bietet den Vorteil, dass die Fässer nach Gebrauch entsprechend chemisch gereinigt werden können. Darüber hinaus bietet die Säurebeständigkeit je nach abgefülltem Getränk und/oder verwendetem Gas zum Zapfen des Getränkes den Vorteil, dass eine entsprechende Resistenz gegeben ist.

Die Temperaturbeständigkeit bietet den Vorteil, dass bei verschiedenen Lagerungstemperaturen und/oder Zapftemperaturen sowie auch Temperaturen beim Reinigen und Desinfizieren wiederum die Farbe weder in ihrer Farbwiedergabe noch in ihrer Hafteigenschaft gefährdet ist und somit beispielsweise ein Lösen oder Abblättern verhindert ist. Vorzugsweise sind die Fassdichtung sowie auch der Lack beständig gegen Reinigungsmittel, insbesondere Ethanol.

Ferner wird im Sinne der Erfindung eine Farbe verwendet, die dauerelastisch aushärtend ist. Durch die Abfüllvorgänge, Lagerungsvorgänge und/oder auch das Ansetzen eines Zapfkopfes wird die Fassdichtung elastisch verformt. Aufgrund der aufgebrachten farblichen Kennzeichnung mit dauerelastisch aushärtender Farbe ist es möglich, dass die farbliche Kennzeichnung sich der jeweiligen Oberfläche und Oberflächenform aufgrund elastischer Verformung anpasst und nicht abblättert und/oder brüchig wird.

Alternativ ist es auch möglich, dass die farbliche Kennzeichnung einstückig in der Fassdichtung, insbesondere in der Oberseite, hergestellt ist. Hierzu kann beispielsweise bei einem Gummispritzvorgang zunächst ein Additiv in die Form eingebracht werden, wobei das Additiv in der späteren farblichen Kennzeichnung in der vorgegebenen geometrischen Form hergestellt ist. Im Anschluss daran wird der Dichtwerkstoff in die Form eingebracht. Das Additiv kann dabei beispielsweise ein Zusatzwerkstoff sein, der sich einstückig mit dem Dichtwerkstoff, insbesondere dem Gummi, verbindet. Das Additiv kann jedoch auch eine derartige chemische Substanz sein, welche den Dichtwerkstoff einfärbt bzw. umfärbt. Im Sinne der Erfindung wäre es auch vorstellbar, die gesamte Fassdichtung einzufärben und dann entsprechend eine geometrische Formung vorzunehmen.

Weiterhin besonders bevorzugt ist die geometrische Form als Formfläche gegenüber einer Dichtfläche der Oberseite zurückversetzt, wobei insbesondere die Farbe zumindest teilweise in der Formfläche angeordnet ist. Hier ist es wiederum vorstellbar, dass die Oberseite des tellerförmigen Bereiches nicht plan verlaufend ist, sondern beispielsweise radial nach innen oder außen in einem Winkel zu einer planen Referenzebene verläuft. Die farbliche Kennzeichnung ist dann in dem Bereich aufgebracht, welcher nicht direkt plan mit der Referenzebene zur Anlage kommt, sondern gegenüber dieser zurückversetzt ist.

Im Rahmen der Erfindung ist es jedoch auch möglich, dass die Formfläche zur Ausbildung der geometrischen Form in die Oberfläche eingebracht ist. Beispielsweise kann dies mit einem Prägevorgang, der eine plastische Verformung hervorruft, durchgeführt werden. Weiterhin ist ein abrasives oder auch spanabhebendes Verfahren möglich. Ebenfalls vorstellbar ist es, durch Einsatz eines Lasers die entsprechende geometrische Form plastisch und/oder dreidimensional in die Oberfläche einzubringen, insbesondere als vertiefte Kontur. Die Formfläche kann dabei selbst in ihrer Fläche größer ausgebildet sein als die Fläche des Farbauftrags. Beispielsweise kann die Formfläche als umlaufender Ring gegenüber der Oberfläche mit einem Abstand zurückversetzt ausgebildet sein. Sieht die Kennzeichnung der Zeitperiode nunmehr vor, dass nur Ringsegmente farblich gekennzeichnet sind, so werden nur diese Ringsegmente farblich gekennzeichnet auf die Formfläche aufgebracht. Im Rahmen der Erfindung ist es weiterhin vorstellbar, dass beispielsweise mit einem Präge- oder Stempelverfahren zur Herstellung der Formfläche durch plastische Deformation gleichzeitig der Farbauftrag durchgeführt wird. Auch kann der Farbauftrag in einer bereits vorhandenen Formfläche erfolgen, beispielsweise in einer nachfolgenden Nut.

Weiterer Bestandteil der Erfindung ist ein Erkennungssystem für Fassdichtungen von Getränkefässern. Für dieses Erkennungssystem werden vorbeschriebene Fassdichtungen verwendet. Das Erkennungssystem zeichnet sich dadurch aus, dass die farbliche Kennzeichnung als zumindest teilweise umlaufender Ring auf der Oberseite der Fassdichtung aufgebracht ist und einer definierten Zeitperiode eine Farbe und mindestens ein Segmentabschnitt des Ringes zugeordnet ist.

Bei der Zeitperiode handelt es sich insbesondere um Kalenderjahre. Es kann sich jedoch auch um beispielsweise ein Abfülljahr, eine Saison oder eine von dem Verwender des Erkennungssystems definierte Zeitperiode handeln. Jeder Zeitperiode können somit eine definierte Farbe sowie eine geometrische Form bzw. entsprechende Ringsegmente in der Farbgebung zugeordnet werden. Bevorzugt wird immer nur eine Farbe an einer Fassdichtung verwendet, so dass eine einwandfreie Identifizierung der Zeitperiode durch manuelle, teilmechanisierte aber auch vollautomatisierte optische Erkennung möglich ist. Im Rahmen der Erfindung wäre es jedoch auch vorstellbar, zwei Farben kombiniert zu verwenden.

Bei Verwendung des vorgenannten Erkennungssystems mit den beschriebenen Fassdichtungen ist es somit möglich, ein Verfahren zur Bestimmung des Einbaualters bzw. Alters einer Fassdichtung durchzuführen. Die Fässer werden mit den Fassdichtungen in einer bestimmten Zeitperiode bereitgestellt. Beispielsweise erfolgt eine Umrüstung bereits gebrauchter Fässer im Jahr X oder aber die Neuproduktion von Fässern im Jahr X. Diese bekommen eine erste Farbe sowie eine erste geometrische Form für das Jahr X zugeteilt.

Im Jahr X + 1 können die Fässer dann in dem Abfüllbetrieb einer optischen Kontrolle unterzogen werden. Durch die farbliche und geometrische Kennzeichnung kann somit das Alter der Fassdichtung bezogen auf die vorgegebene Zeitperiode bestimmt werden. Es können somit alle Fassdichtungen des Jahres X erkannt werden.

Bei dem Alter der Fassdichtung handelt es sich insbesondere um den Zeitpunkt der Montage der Fassdichtung, mithin das Einbaualter. Die Fassdichtung selbst kann ein Produktionsdatum haben, das vor diesem Zeitpunkt, gegebenenfalls auch einen längeren Zeitraum von Wochen, Monaten oder gar Jahren vor dem Zeitpunkt, der Erstmontage selbst liegt.

Das Bestimmen des Alters bezieht sich dann auf die definierte Zeitperiode. Beispielsweise bei einem Kalenderjahr X ist es möglich, die Montage der Fassdichtung diesem Jahr X zuzuordnen. Die Fassdichtung kann dann bereits im Januar des Jahres X, jedoch auch in der Mitte, beispielsweise im Juni des Jahres X, oder am Ende des Jahres X, mithin im Dezember, montiert worden sein. Im Januar des Jahres X + 1 wird dann eine andere Farbe mit anderer geometrischer Kennzeichnung vorgegeben und ab dem 01. Januar des Jahres X + 1 montiert. Es kann somit, insbesondere in dem Abfüllbetrieb, durch manuelle, teilmechanisierte oder auch vollautomatisierte optische Kontrolle das Jahr X identifiziert werden und nach jeweiliger Vorgabe des Getränkelieferanten und/oder des Abfüllbetriebes durch die Dichtung des Jahres X + 1 bzw. X + n ersetzt werden.

Das erfindungsgemäße System bietet insbesondere den Vorteil, dass unabhängig vom Aufenthaltsort des Fasses (Abfüllbetrieb, Wirtshaus, Lager) in einfacher und schneller Weise das Alter der Fassdichtung bestimmt werden kann. Es sind nicht zwingend technische Hilfsmittel notwendig. Durch die farbliche und geometrische Form ist es für das menschliche Auge einfach und unanfällig für Fehler erkennbar und das Alter der Fassdichtung beispielsweise mit einer Referenztabelle bestimmbar.

In Abfüllbetrieben kann dann dieses Verfahren zur Kontrolle vollautomatisiert durch einen kamerabasierten Sensor durchgeführt werden. Jederzeit kann jedoch wiederum durch manuellen Eingriff und/oder manuelle Nachkontrolle das Alter der Fassdichtung überprüft und gegebenenfalls die Fassdichtung ausgetauscht werden.

Weitere Vorteile, Merkmale, Eigenschaften und Aspekte der vorliegenden Erfindung sind Gegenstand der nachfolgenden Beschreibung. Bevorzugte Ausgestaltungsvarianten werden in den schematischen Figuren dargestellt. Diese dienen dem einfachen Verständnis der Erfindung. Es zeigen:
- Figur 1 bis 5: verschiedene Ansichten und Querschnittsansichten von Fassdichtungen mit jeweils beispielhafter farblicher und geometrischer Kennzeichnung für Zeitperioden.

In den Figuren werden für gleiche oder ähnliche Bauteile dieselben Bezugszeichen verwendet, auch wenn eine wiederholte Beschreibung aus Vereinfachungsgründen entfällt.

Figur 1a) und b) zeigen eine perspektivische Ansicht sowie Draufsicht einer ersten Fassdichtung. Diese ist auch als A-Type bzw. G-Type bekannt. In der Querschnittsansicht gemäß Figur 1c) sind darüber hinaus Bemaßungen als Angaben in Millimeter eingezeichnet, die als beispielhaft gelten und die Fassdichtung gemäß Figur 1 nicht einschränkend beschreiben.

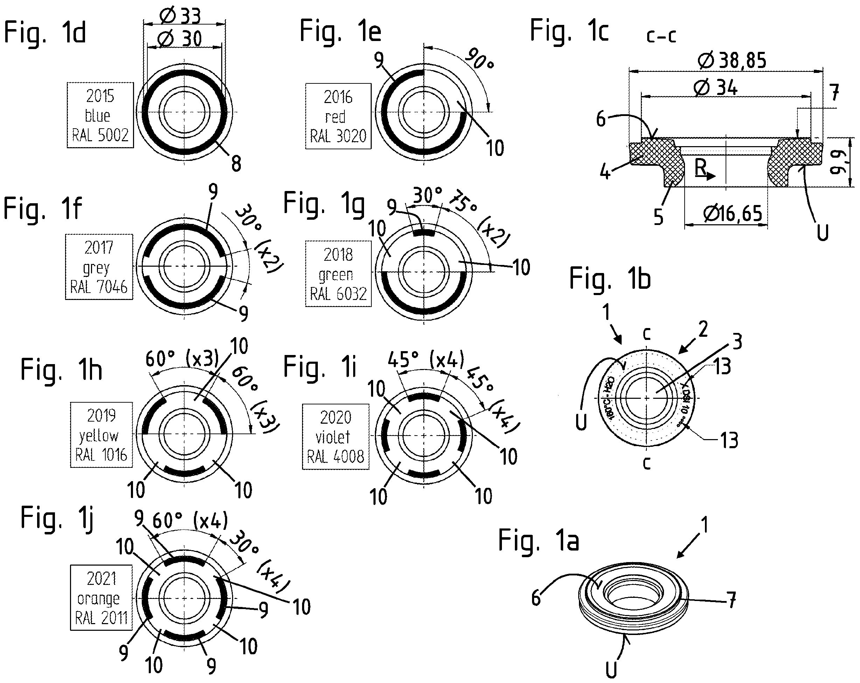

Die Fassdichtung 1 gemäß Figur 1 weist somit einen runden Grundkörper 2 auf mit einer mittigen Ausnehmung 3. Gemäß der Querschnittsansicht von Figur 1c) ist gut zu erkennen, dass ein oberer tellerförmiger Bereich 4 ausgebildet ist und ein sich darunter liegender Stegbereich 5 erstreckt. Die Oberseite 6 ist derart ausgebildet, dass diese auf die Radialrichtung R nach innen bezogen abfallend bzw. schräg verlaufend ist.

Nunmehr ist vorgesehen, dass eine Kennzeichnung 7 durch einen Farbauftrag vorhanden ist. Die geometrische Form dieser Kennzeichnung 7 ist in Figur 1d) bis j) beschrieben und kann je nach zugeordneter Zeitperiode variieren. Die geometrische Kennzeichnung 7 ist jedoch immer als zumindest teilweise umlaufender Ring ausgebildet.

In Figur 1d) ist die geometrische Form als vollständig umlaufender Ring 8 ausgebildet. Auch hier sind wiederum geometrische Maße korrespondierend zu Figur 1c) eingezeichnet, die jedoch die Form des Ringes 8 nicht abschließend festlegen müssen. Ebenfalls ist ein erstes Jahr, hier 2015, mit der Farbe blau (blue) RAL 5002 beispielhaft angegeben.

Ferner sind dann in den Figuren 1e) bis j) dargestellt jeweils Ringsegmente 9 in einer Farbe, wobei die Farben voneinander abweichen. Den Farben ist ein jeweiliges Kalenderjahr von 2015 bis 2021 zugeordnet und die Farben sind beispielhaft mit einem RAL-Code benannt. Ferner sind Ausschnitte 10 ebenfalls in Form von Ringsegmenten 9 des umlaufenden Ringes 8 nicht farblich gekennzeichnet, so dass sich zusätzlich zur voneinander verschiedenen Farbe voneinander verschiedene geometrische Formen bzw. geometrische Erscheinungen ergeben. Würde nunmehr die Farbe verblassen und/oder die geometrische Form, beispielsweise durch abrasiven Verschleiß, beschädigt werden, wäre jeweils eine Redundanz zur optischen Kontrolle und Bestimmung des damit einhergehenden Alters der Fassdichtung möglich. Ferner sind die Winkelbereiche in den Figuren 1e) bis j) der Ringsegmente 9 mit Farbe und der Ausschnitte 10 ohne Farbe beispielhaft angegeben. In Figur 1b) können unabhängig von der erfindungsgemäßen Kennzeichnung weitere Angaben 13, beispielsweise zum Hersteller, der Temperaturbeständigkeit oder des Werkstoffes oder auch des eigentlichen Produktionsjahres auf der Unterseite U, angebracht sein.

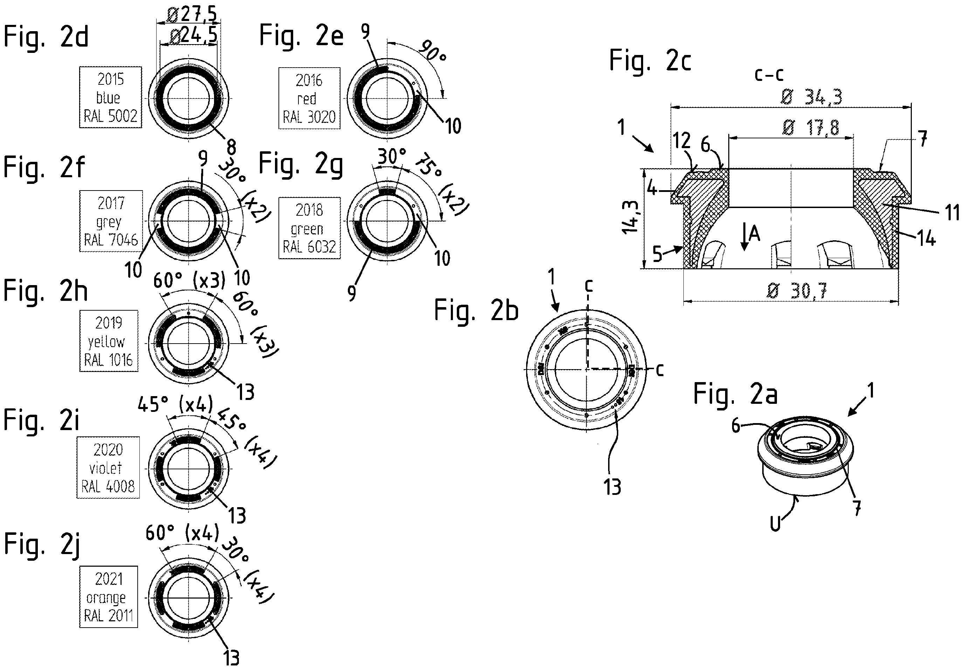

Figur 2 zeigt eine davon verschiedene Fassdichtung 1 in perspektivischer Ansicht in Figur 2a) und Draufsicht von oben in Figur 2b). Diese Fassdichtung 1 wird auch als D-Type bezeichnet, wobei die Figur 2c), welche eine Querschnittsansicht gemäß der gewinkelten Schnittlinie c-c aus Figur 2b) darstellt, zeigt, dass diese Fassdichtung zweikomponentig ausgebildet ist. Hierzu ist ein Kernmaterial 11 umspritzt mit einem Dichtwerkstoff 14, beispielsweise einem gummiartigen Werkstoff. Die Fassdichtung 1 weist wiederum einen tellerförmigen oberen Abschnitt 4 mit einer Oberseite 6 auf sowie einen sich davon erstreckenden stegförmigen Bereich 5. Nunmehr ist eine Formfläche 12 gegenüber der Oberseite 6 in Axialrichtung A auf die Einbaulage bezogen auf die Bildebene nach unten zurückversetzt. Auf dieser Formfläche 12 ist nunmehr wiederum die Kennzeichnung 7 durch den Farbauftrag aufgebracht. Die Formfläche 12 ist bauartbedingt in der in Figur 2 dargestellten Fassdichtung 1 ausgebildet, kann jedoch auch zur Durchführung der Kennzeichnung 7 in die Oberseite 6 zusätzlich eingebracht werden, beispielsweise durch plastische Deformation oder abrasiver Verfahren, beispielsweise Lasern. Figur 2d) bis j) zeigen wiederum analog die verschiedenen Ausgestaltungsvarianten der geometrischen Form zugeordnet zu dem jeweiligen Jahr von 2015 bis 2021. Ebenfalls angegeben sind wiederum die damit verbundenen Farben gemäß RAL-Farbklassifizierung.

Weiterhin dargestellt in Figur 2b) sind Angaben 13, die auf der Oberfläche 6 bzw. auf der Formfläche 12 angeordnet sein können. Diese weiteren Angaben 13 können beispielsweise durch ein Verprägen entsprechender Flächen ausgebildet sein, jedoch auch eingelasert sein oder dreidimensional gegenüber dieser Fläche vorstehend oder vertieft sein. Gut zu erkennen beispielsweise in den Figuren 2h) und i) ist, dass sich die Kennzeichnung 7 mit den Angaben 13 überlappen kann. Insbesondere bei einem nachträglichen Farbauftragverfahren ist dies möglich.

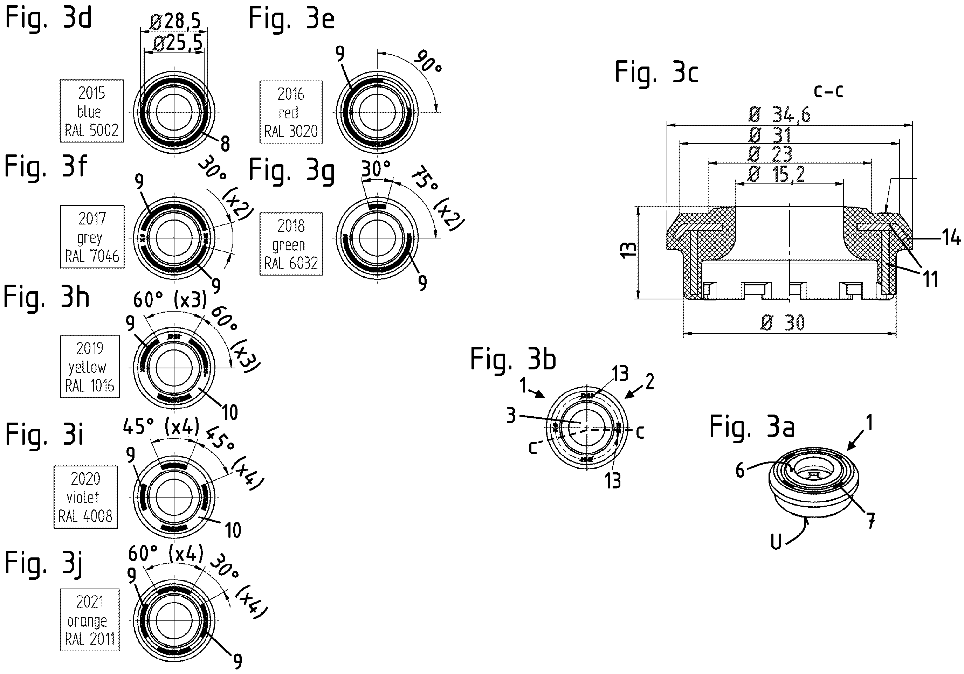

Dies gilt auch für die in Figur 3 dargestellten Varianten. Hier ist jedoch die Armierung beispielhaft als zweigeteiltes Kernmaterial 11 ausgebildet. Das Kernmaterial 11 kann auch einstückig sein.

Die dargestellte Fassdichtung 1 in Figur 3 wird auch als M-Type oder L-Type bezeichnet.

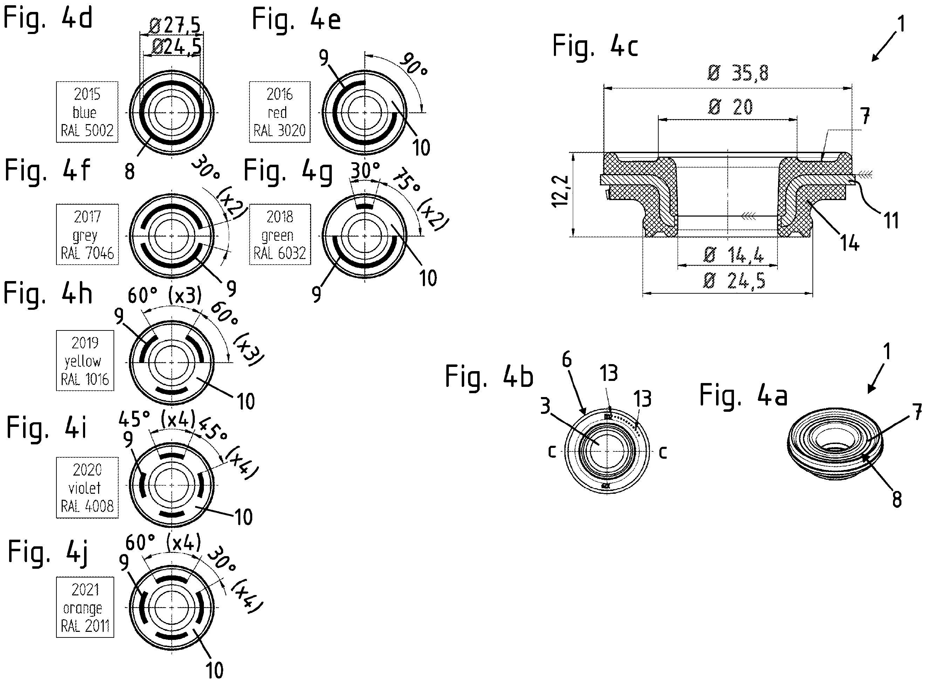

In Figur 4 ist ferner eine Fassdichtung 1 dargestellt, die ebenfalls einen runden Grundkörper 2 mit mittig liegender Ausnehmung 3 aufweist. Diese Dichtung wird auch als U-Type bezeichnet. Auch hier ist analog zu den vorgenannten Figuren ein Farbauftrag in geometrisch definierter Form dargestellt. Auch hier ist wiederum ein Kernmaterial 11 umgeben von einem Dichtwerkstoff 14.

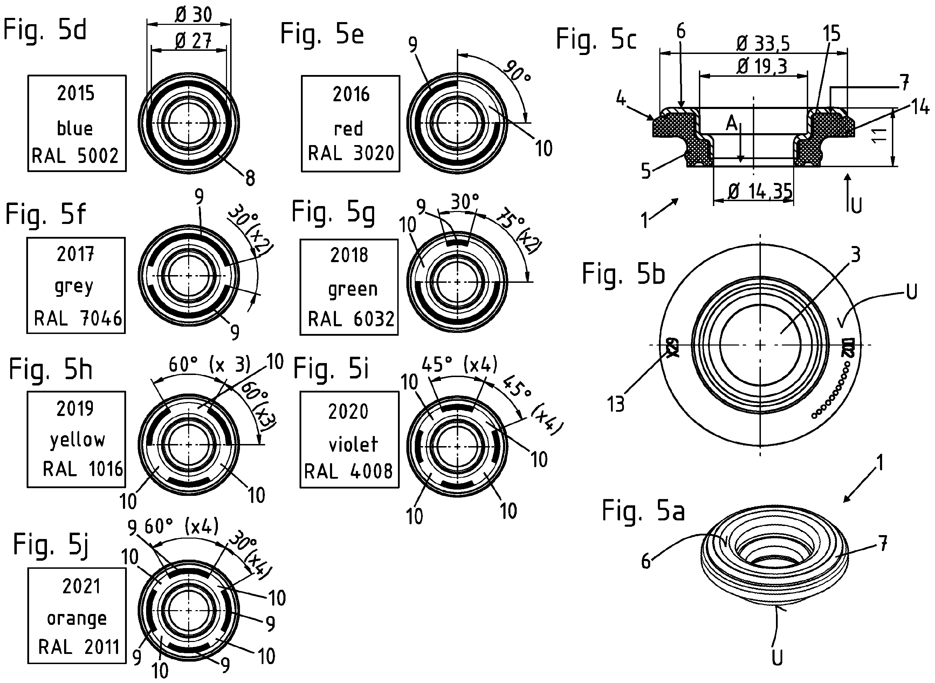

Figur 5 zeigt ebenfalls eine Fassdichtung 1, welche auch als S-Type bezeichnet wird. Auch dieser weist einen oberen tellerförmigen Bereich 4 sowie einen sich davon nach unten erstreckenden stegförmigen Bereich 5 auf, wobei eine Abdeckscheibe 15 vorgesehen ist und die farbliche Kennzeichnung 7 auf die Abdeckscheibe 15 aufgebracht ist. Auch hier ist wiederum eine Kennzeichnung 7 in Form eines Farbauftrages vorgenommen, so dass entsprechend der Figuren 5d) bis j) wiederum die entsprechende Kennzeichnung 7 in Verbindung mit der Farbe einem Jahr zugeordnet werden kann. Hierbei handelt es sich beispielhaft um eine zweiteilige gesteckte Lösung, welche auch gemäß der anderen Beispiele einteilig ausgeführt werden kann, indem das Kernmaterial 11 eine feste Verbindung mit dem Dichtwerkstoff 14 eingeht.

### Bezugszeichen:

- 1 -: Fassdichtung
- 2 -: Grundkörper
- 3 -: Ausnehmung
- 4 -: tellerförmiger Bereich
- 5 -: stegförmiger Bereich
- 6 -: Oberseite
- 7 -: Kennzeichnung
- 8 -: Ring
- 9 -: Ringsegment
- 10 -: Ausschnitt
- 11 -: Kernmaterial
- 12 -: Formfläche
- 13 -: Angaben
- 14 -: Dichtwerkstoff
- 15 -: Abdeckscheibe

- U -: Unterseite
- R -: Radialrichtung
- A -: Axialrichtung

## Patentansprüche

1. Fassdichtung (1) für ein Getränkefass, wobei die Dichtung einen runden Grundkörper (2) aus gummiartigem Dichtwerkstoff (14) mit einer diesen durchgreifenden Ausnehmung (3) aufweist und einen oberen tellerförmigen Bereich (4) und einen sich davon in Einbaulage nach unten erstreckenden Stegbereich (5), **dadurch gekennzeichnet, dass** auf einer Oberseite (6) des tellerförmigen Bereiches (4) eine farbliche Kennzeichnung (7) mittels eines Farbauftragverfahrens aufgebracht ist mit einer definierten geometrischen Form aufgebracht ist, wobei die geometrische Form ein zumindest teilweise umlaufender Ring (8) ist.

2. Fassdichtung nach Anspruch 1, **dadurch gekennzeichnet, dass** ein, zwei, drei oder vier Ringsegmente (9) zueinander beabstandet umlaufend als geometrische Form aufgebracht sind.

3. Fassdichtung nach Anspruch 1 oder 2, **dadurch gekennzeichnet, dass** die farbliche Kennzeichnung (7) durch Tampondruck oder als Sprühlack oder mittels Folientransferverfahren aufgebracht ist.

4. Fassdichtung nach einem der Ansprüche 1 bis 3, **dadurch gekennzeichnet, dass** als Farbe für die farbliche Kennzeichnung (7) ein zwei Komponenten Lack verwendet ist.

5. Fassdichtung nach Anspruch 1, **dadurch gekennzeichnet, dass** die Farbe lebensmittelkonform und/oder abriebfest und/oder säurebeständig und/oder temperaturbeständig und/oder ethanolbeständig und/oder dauerelastisch aushärtend ist.

6. Fassdichtung nach Anspruch 1, **dadurch gekennzeichnet, dass** die farbliche Kennzeichnung (7) einstückig in der Oberseite (6) hergestellt ist.

7. Fassdichtung nach einem der Ansprüche 1 bis 6, **dadurch gekennzeichnet, dass** die geometrische Form als Formfläche (12) gegenüber einer Dichtfläche der Oberseite (6) zurückversetzt ist, wobei insbesondere die Farbe zumindest teilweise in der Formfläche (12) angeordnet ist.

8. Erkennungssystem für Fassdichtungen von Getränkefässern unter Verwendung mindestens einer Fassdichtung nach Anspruch 1, **dadurch gekennzeichnet, dass** die farbliche Kennzeichnung (7) zumindest als teilweise umlaufender Ring (8) auf der Oberseite (6) aufgebracht ist, wobei einer definierten Zeitperiode eine Farbe und mindestens ein Segmentabschnitt des Ringes (8) zugeordnet ist.

9. Verfahren zur Bestimmung des Alters einer Fassdichtung (1), wobei Fässer mit einer Fassdichtung (1) mit den Merkmalen von mindestens Anspruch 1 einer optischen Kontrolle unterzogen werden und durch farbliche und geometrische Kennzeichnung (7) das Alter der Fassdichtung (1) bestimmt wird.

10. Verfahren nach dem vorhergehenden Anspruch, **dadurch gekennzeichnet, dass** die optische Kontrolle mit einem optischen Sensor durchgeführt wird und/oder dass die Farbe und die geometrische Kennzeichnung (7) redundant durchgeführt werden.

## Claims

1. Cask seal (1) for a beverage cask, wherein the seal comprises a round base body (2) made of rubber-like seal material (14) having a recess (3) extending through same, and an upper plate-shaped region (4) and a support region (5) extending downward therefrom in the installed position, **characterised in that** a colour marking (7) is applied on a top side (6) of the plate-shaped region (4) by means of a colour application method, having a defined geometry, wherein the geometrical shape is an at least partially encircling ring (8).

2. Cask seal according to claim 1, **characterised in that** one, two, three or four ring segments (9), spaced apart from one another, are applied in an encircling manner as geometric shapes.

3. Cask seal according to claim 1 or 2, **characterised in that** the colour marking (7) is applied using pad printing or spray painting or by means of film transfer methods.

4. Cask seal according to one of claims 1 to 3, **characterised in that** a two-component paint is used as the colour for the colour marking (7).

5. Cask seal according to claim 1, **characterised in that** the colour when hardened is food compatible and/or abrasion resistant and/or acid resistant and/or temperature resistant and/or ethanol resistant and/or permanently elastic.

6. Cask seal according to claim 1, **characterised in that** the colour marking (7) is produced as a single piece on the top side (6).

7. Cask seal according to one of claims 1 to 6, **characterised in that** the geometric shape is set back from a sealing surface of the top side (6) as a forming surface (12), wherein, in particular, the colour is arranged at least partially in the forming surface (12).

8. Recognition system for cask seals of beverage casks using at least one cask seal according to claim 1, **characterised in that** the colour marking (7) is applied as an at least partially encircling ring (8) on the top side (6), wherein a colour and at least one segment portion of the ring (8) is associated with a defined period of time.

9. Method for determining the age of a cask seal (1), wherein casks with a cask seal (1) with the features of at least claim 1 are subjected to an optical inspection and the age of the cask seal (1) is determined through colour and geometric marking (7).

10. Method according to the preceding claim, **characterised in that** the optical inspection is carried out using an optical sensor and/or **in that** the colour and the geometric marking (7) are performed redundantly.

## Revendications

1. Joint de fût (1) pour un fût de boisson, dans lequel le joint présente un corps de base rond (2) en matériau étanche caoutchouteux (14) avec un évidement (3) traversant celui-ci et une zone (4) en forme de disque supérieure et une zone de nervure (5) s'étendant vers le bas de celle-ci en position d'installation, **caractérisé en ce que** sur un côté supérieur (6) de la zone (4) en forme de disque un marquage (7) coloré est appliqué au moyen d'un procédé d'application de couleur avec une forme géométrique définie, dans lequel la forme géométrique est un anneau (8) tournant au moins partiellement.

2. Joint de fût selon la revendication 1, **caractérisé en ce qu'**un, deux, trois ou quatre segments annulaires (9) sont appliqués tournant à distance les uns des autres en tant que forme géométrique.

3. Joint de fût selon la revendication 1 ou 2, **caractérisé en ce que** le marquage (7) coloré est appliqué par impression de tampon ou en tant que vernis de pulvérisation ou au moyen d'un procédé de transfert de film.

4. Joint de fût selon l'une quelconque des revendications 1 à 3, **caractérisé en ce qu'**en tant que couleur pour le marquage (7) coloré un vernis à deux composants est utilisé.

5. Joint de fût selon la revendication 1, **caractérisé en ce que** la couleur est de catégorie alimentaire et/ou résistante la friction et/ou résistante à l'acide et/ou résistante à la température et/ou résistante à l'éthanol et/ou durcissante à élasticité permanente.

6. Joint de fût selon la revendication 1, **caractérisé en ce que** le marquage (7) coloré est fabriqué d'un seul tenant dans le côté supérieur (6).

7. Joint de fût selon l'une quelconque des revendications 1 à 6, **caractérisé en ce que** la forme géométrique est reculée en tant que surface de forme (12) par rapport à une surface étanche du côté supérieur (6), dans lequel en particulier la couleur est agencée au moins partiellement dans la surface de forme (12).

8. Système de reconnaissance pour des joints de fût de fûts de boisson en utilisant au moins un joint de fût selon la revendication 1, **caractérisé en ce que** le marquage (7) coloré est appliqué au moins en tant qu'anneau (8) tournant partiellement sur le côté supérieur (6), dans lequel à une période de temps définie sont associées une couleur et au moins une section de segment de l'anneau (8).

9. Procédé de détermination de l'âge d'un joint de fût (1), dans lequel des fûts avec un joint de fût (1) avec les caractéristiques d'au moins la revendication 1 sont soumis à un contrôle optique et l'âge du joint de fût (1) est déterminé par le marquage (7) coloré et géométrique.

10. Procédé selon la revendication précédente, **caractérisé en ce que** le contrôle optique est réalisé avec un capteur optique et/ou la couleur et le marquage (7) géométrique sont réalisés de manière redondante.
